# EUROPEAN PATENT SPECIFICATION

(11) **EP 1 166 200 B1**
(45) Date of publication and mention of the grant of the patent: **11.12.2002**
(21) Application number: 00912748.1
(22) Date of filing: 16.03.2000
(51) Int. Cl.: G06F 3/02

(54) **AN ACTUATOR DEVICE FOR A PERSONAL COMPUTER**
BETÄTIGUNGSVORRICHTUNG FÜR PERSONALCOMPUTER
DISPOSITIF D'ACTIONNEUR POUR ORDINATEUR PERSONNEL

(30) Priority: 31.03.1999 US 282331
(43) Date of publication of application: 02.01.2002
(73) Proprietor: International Business Machines Corporation, Armonk, NY 10504 (US); IBM United Kingdom Limited, Portsmouth Hampshire PO6 3AU (GB)
(72) Inventor: COLLINS, Joel, Raleigh, NC 27612 (US); MCCLURG, Gary, Robert, Louisburg, NC 27549 (US); PARTIN, Philip, Edward, Wake Forest, NC 27587 (US); SWANSEY, John, David, Durham, NC 27701 (US); ZHAI, Shumin, San Jose, CA 95123 (US)
(74) Representative: Jennings, Michael John
(86) International application number: GB0000976
(87) International publication number: WO00058819

(56) References cited:
- GB-A- 2 264 196
- US-A- 5 701 142
- US-A- 5 889 507

## Description

### FIELD OF THE INVENTION

This invention relates to an actuator device for a personal computer, typically for inclusion as a joystick on a computer mouse.

### BACKGROUND OF THE INVENTION

The IBM ScrollPoint mouse is a mouse with a miniature joystick embedded in the top front end of a mouse. That particular joystick is dedicated to scrolling and zooming functions when viewing and working on an electronic document, or viewing web pages. The joystick is implemented with a FSR (force sensitive resistor) sensor, which converts the force applied to the shaft to electrical signals, which are processed and sent to the host computer as scrolling messages. The joystick is manipulated by any finger, which is situated most comfortably on the exterior portion or end cap of the joystick. The shape of the actuator cap has critical impact on the user's experience with a device, such as the ScrollPoint mouse.

Some previous IBM ScrollPoint mice used a small or approximately 0.7 mm wide circular dome shaped actuator which have resulted in some of the following situations, which are less than desirable. For example, due to the relatively small contact surface with the bottom of the finger tip, it was deemed preferable to develop a "cat tongue" fibre material for the actuator to increase friction of the finger against the cap. A somewhat elaborate multi-phase process is required in the manufacture of this material in order to create a durable product. As a result, the cat-tongue surface is expensive relative to the total cost of the mouse. Further, while it does provide for good or satisfactory friction for finger control, the cat tongue material is considered, by some, as unpleasant to the touch. Additionally, with a dome shaped actuator, a user can not with satisfactory ease readily differentiate in feel between vertical and horizontal direction. When intending to scroll a document vertically, an horizontal element may be introduced by accidentally pushing the dome shaped actuator diagonally. Scrolling is different from pointing, and often requires moving along strictly vertical or strictly horizontal directions.

These aspects are important to the use and marketability of a computer device since a mouse is an important part of a computer that users readily touch and feel during the time of selection of a system for purchase and, of course, subsequently, when making use of the machine selected.

Patent Application GB 2 264 196 discloses a button for use on a keypad, for example, on a calculator or a telephone, has an upper surface which is contoured to have a concave profile viewed from one direction X and a convex profile viewed from an orthogonal direction Y.

### SUMMARY OF THE INVENTION

Accordingly, the invention provides an actuator device for a joystick of a personal computer, the device having a top surface for contacting a finger of a user of the device shaped in the form of a saddle for cradling the finger when in contact with the surface of the device, and being moveable in a lateral direction to control the joystick.

Such configuration and shape of the actuator surface of the device are well-suited to use with the scrolling joystick of, for example, the IBM Corporation ScrollPoint mouse, or any other mouse or other button design used, for example, with an integrated scrolling joystick. The actuator device (or cap thereof) provides the user with improved control performance, and more pleasant feel at a lower manufacturing cost. The specially configured and textured saddle shaped actuator provides for a device which a user can easily and successfully control and enjoy the comfort experienced when doing an operation involving the control device. Although in the preferred embodiment the actuator device has been tailored for use and implementation with the IBM ScrollPoint mouse, the same design can be applied to any other devices operated by the human finger or thumb for use with personal computer controls. In particular, the IBM ScrollPoint device is an isometric joystick which senses forces applied to a multiplicity of, and preferably four, force resistive sensors or FSRs. The same actuator design can be applied to non-isometric, displacement sensing control devices.

The original cat tongue design was adopted from the IBM ThinkPad TrackPoint device. In the case of the TrackPoint device, the actuator has to be small to fit between the keys in the keyboard. TrackPoint device has been primarily for pointing, so an asymmetrical shape is not used. Since there is less space constraint in a mouse and scrolling is done by a dedicated sensor, the shape of the actuator according to the needs of scrolling can be optimized. In essence, a shaped design that has asymmetrical geometry on the lateral versus the vertical direction is preferred.

The saddle shaped actuator of the preferred embodiment is comfortable to touch and easy to operate in part because of the removal of the need for a cat tongue like surface, because of the increased contact area with the finger, because of the conformity of the contour of the actuator with the finger shape, and because of the pattern of concentric oval ridges on the surface or the actuator that reduce finger slippage. Due to the preferred asymmetry between the lateral and front to back profiles, the user has strong cues to differentiate between vertical and horizontal scrolling.

Thus described herein is a control surface and surface shape of an input device for a personal computer, and in particular the texturing and multi-angled facets of such a device for contact with a finger of a human hand for applying pressure and force thereto for causing manipulation, manoeuvring and speed control of cursor and personal computer monitor screen images.

According to the preferred embodiment, the finger controlled actuator for a mouse or other personal computer device provides pressure to force sensitive resistor circuitry to provide for scrolling or other like control functions on and for a personal computer, wherein the actuator has specially surfaced, such as ribbed, and configured surfaces, such as saddle like in shape for cradling the finger of a personal computer user and allowing for satisfactory gripping between the flesh of the finger and the surface of the actuator to prevent slippage in any one of multiple directions about both the vertical and horizontal directions or some quadrant of both directions, while providing for comfort to the finger and hand of the user and for self orienting of the finger relative to actuator and the mouse body for proper control and operation, for example, the scrolling friction.

### BRIEF DESCRIPTION OF THE DRAWINGS

An embodiment of the invention is described with reference to the accompanying drawings, in which:
FIG. 1 is a mouse with the saddle shaped actuator, according to a preferred embodiment of the present invention;
FIG. 2 is a perspective view of the saddle shaped actuator, according to a preferred embodiment of the present invention;
FIG. 3 is a view of the top surface, with an oval race track appearance, of the actuator according to a preferred embodiment of the present invention, with illustrated texturing of the top surface;
FIG. 4 is a view of the symmetrical concave configuration of the actuator when viewed from left to right across the actuator, or a front (finger tip view) or, in the alternative, a rear view (view from the centre of the mouse);
FIG. 5 is a side view of the actuator, along the length of a finger used to control the actuator, showing the symmetrical convex configuration of the contact surface when viewed from front to back on either the left or the right side of the actuator;
FIG. 6 is a further illustration of the actuator as shown in FIG. 4 and is a front view of a human finger on the actuator cap, showing motion for the finger and a resultant force diagram or force vectors applied across the actuator geometry; and
FIG. 7 is a further illustration of the actuator as shown in FIG. 5 and is a side view, or lateral view, of a finger on the actuator or cap, showing a finger rocking motion on the cap producing force vectors on the cap and transferred onto and through the shaft attached to the cap.

### DESCRIPTION OF THE PREFERRED EMBODIMENT

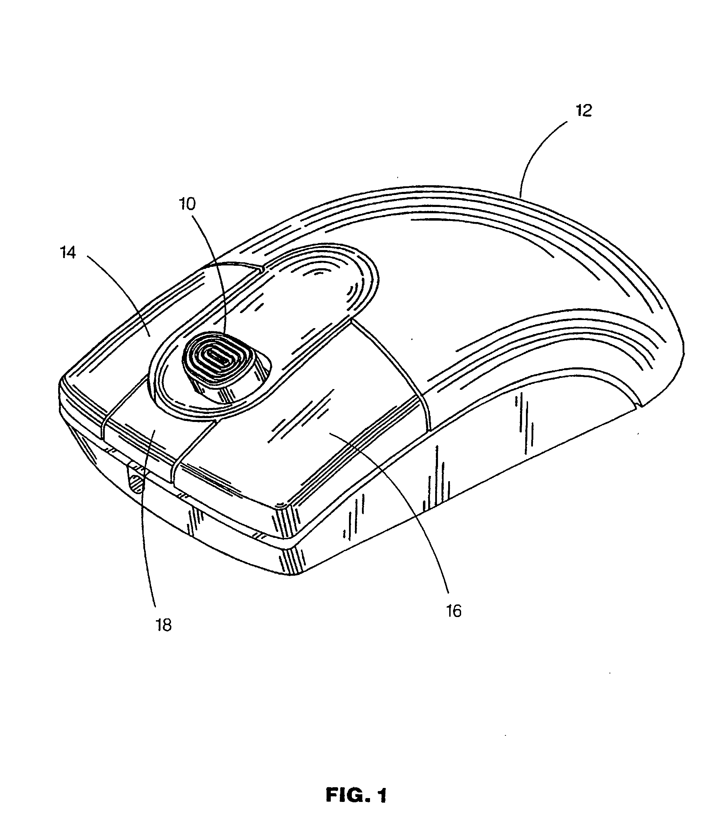

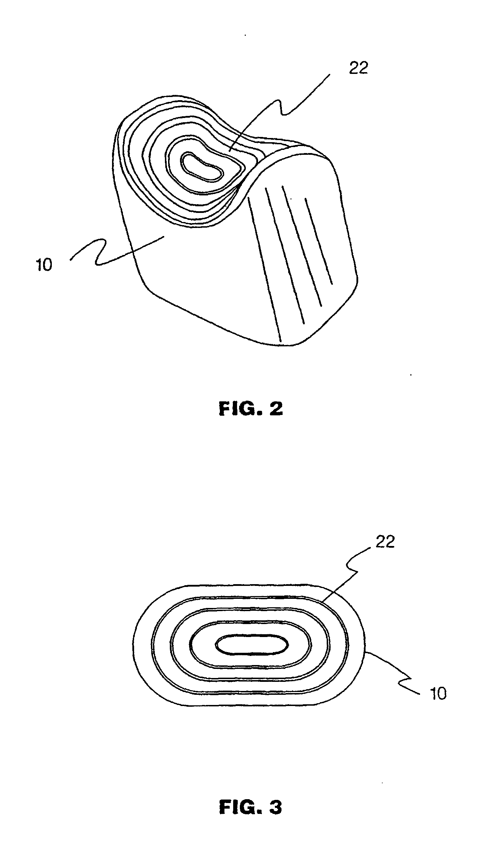

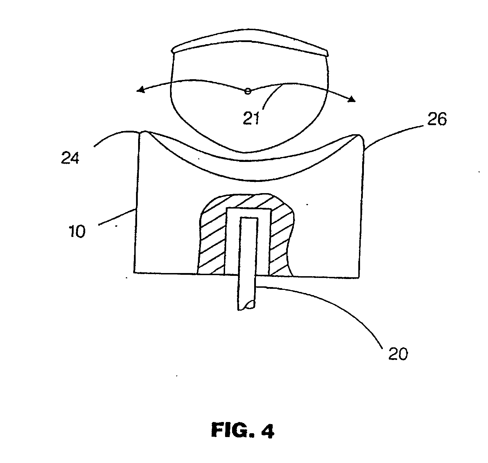

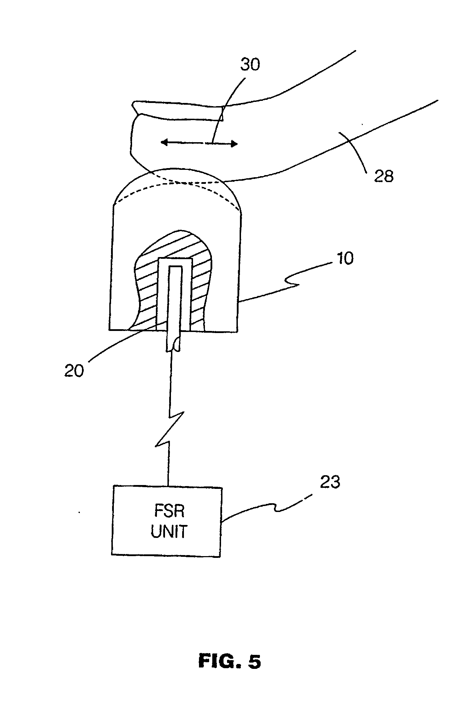

A saddle shaped actuator 10 is illustrated in FIG. 1 and is disposed within a mouse body 12 which has other buttons, such as buttons 14, 16, and 18 for controlling personal computer functions. FIG. 2 is a perspective view of an asymmetrically shaped actuator with a textured surface, which can be, for example, a washboard pattern, or a saw-tooth formed surface 22, or any surface with slightly raised ribs or pimple like projections up from the top surface 22 of the actuator 10, suitable for improved gripping of the finger when applying a force directly upon or in a directional manner or vector, other than in a perpendicular direction or in line with the shaft 20 of a joy stick, as illustrated in FIGs. 4 and 5. The preferred surface form, or configuration, or texture, can be applied utilizing any number of manufacturing techniques, including moulding the texture or surface configuration directly into the surface 22. The surface needs to have levels of height differentiation or a material to provide for a gripping contact between the finger and the surface of the actuator 22. A suitable and durable friction material is preferred. A rubberized material can be a suitable alternative. There are other techniques available to apply the texturing after fabrication of the actuator 10. The shaft 20 is illustrated in part and is shown in partial cross section in the figures. The top view of the actuator 10 in FIG. 3, shows a preferred texture pattern or form for the surface 22.

The top surface of the actuator 10, according to the preferred embodiment, is concave from left to right or right to left, as illustrated in FIG. 4 and convex from front to back or back to front, as illustrated in FIG. 5. In the presented illustrations it is formed somewhat as a hyperbolic paraboloid. The illustrations deviate from the true shape of a hyperbolic paraboloid only in that, when viewed from the top down, the fore and aft dimension or length of the saddle at its centre line, does not substantially change when one views other fore and aft dimensions laterally outward from the centre line position toward the sides of the mouse body 12. A true hyperbolic paraboloid is as defined by it geometric formula.

There can be symmetry to the centre line of the surface 22 in either the front or side views of FIGs. 3 or 4, or it could be made not symmetrical about either of the centre lines of the actuator 10. For example as viewed in FIG. 5, that portion of the convex curve toward the hand of the user could have a different slope than that portion of the convex curve toward the tip of the finger of the user. The top view in FIG. 3 of the actuator could be described as an oval race track, and in the preferred embodiment measures approximately 14 mm from left to right, the width, and 10 mm from front to back, the length.

Such a design offers at least the following advantages, which work to negate the undesirable features of the prior art actuator surfaces and configurations. The increased surface area provides for additional and sufficient friction between the finger surface and the surface 22 of the actuator 10. With such an approach in this solution there is no need for the cat tongue surface, hence reducing the cost of manufacturing.

Mechanically it functions in the following manner. The shape of the actuator cap 10 is uniquely suited to the precise application of forces by the fingertip. A study has been undertaken of the motion of finger joints, and the muscles used when applying pressure to the finger tip, and the interaction of the soft part of the fingertip with the hard cap shape. It has been shown that the dynamics of the finger structure are very different when applying front-to-back forces, compared to applying left-to-right or lateral forces.

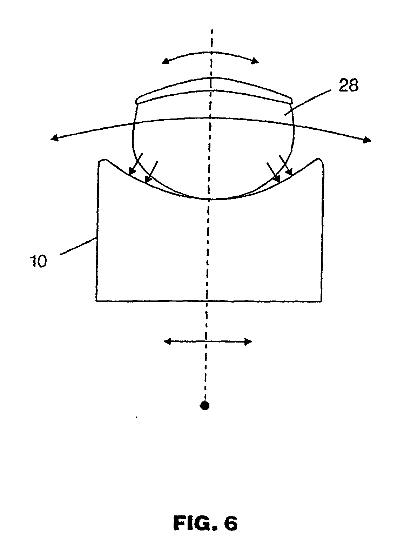

In the horizontal motion, the fingertip rotates or rocks, as somewhat illustrated by the double headed arrow 21 of FIG. 4, slightly in the direction that force is applied, applying pressure to the flared surfaces toward the side edges 24 and 26 of the cap 10. These flared surfaces approaching the edges 24 and 26 prevent the finger from slipping off, as can best be seen in FIGs. 4 and 6.

As shown in FIG. 5, the finger 28 can have motion in either of the directions of the double headed arrow 30, or back and forward, against the surface 22 of the actuator 10, which action creates a force on the surface 22 which is translated to the stick 20 attached to the actuator 10 as shown in partial view in FIG. 5. As is known and has been the case for IBM's ScrollPoint mouse, the transferred force then results in a scrolling action, as an example of what the actuator and this manner of applying a force can provide. The necessary signals provided are from FSR sensors in the schematically illustrated FSR assembly unit 23.

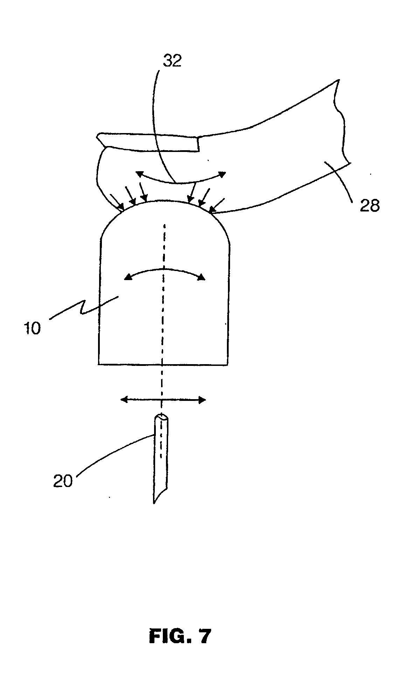

The finger action as illustrated in FIG. 5, which shows a front view of the finger 28 on the cap 10, provides for front to back motion. This translates into vertical scrolling on the monitor and to accomplish this, the fingertip rocks slightly in a direction, see curved arrow 32 (figure 7), opposite to the applied force to the cap surface. The soft tissue of the finger 28 conforms to the convex shape of the actuator 10 in the fore and aft direction, applying continuous force to the cap 10 without slipping off, as is shown in FIG. 7. In FIG. 7, where there is the side view of the finger 28 on the cap 10, there is further showing of the finger motion on the cap 10 producing force(s) on the shaft 20.

## Claims

1. An actuator device (10) for a joystick (20) of a personal computer, said device having a top surface (22) for contacting a finger (28) of a user of the device shaped in the form of a saddle for cradling the finger when in contact with the surface of the device (22), and being moveable in a lateral direction to control said joystick.

2. The actuator device of claim 1, wherein said device is for a mouse (12) for the personal computer, said device having a top surface (22) for receiving the finger (28) of the user of the mouse, which surface is substantially oval in shape when viewed in plan view and which surface has a topography which when viewed from a first position, which constitutes a first side view, is concave in shape at the surface and when viewed from a second position, orthogonal to the first position, which constitutes a second side view, is convex in shape at the surface.

3. The actuator device of claim 2, further comprising a texture imposed on the surface to provide for gripping of the finger (28) of the user of the mouse (12) to the concave end convex shapes of the surface of the actuator device (22).

4. The actuator device of claim 3, wherein the texture imposed upon the surface of said device enables the user to differentiate between scrolling directions.

5. The actuator device of claim 4, wherein said texture comprises protrusions extending from the surface to provide for gripping of the finger to the surface when the finger is pressed against the scrolling device to achieve scrolling within the personal computer.

6. The actuator device of claim 3, 4 or 5, wherein the texture imposed on the surface is rubber-like in composition providing a friction feel to the finger (28) of the user.

7. The actuator device of any of claims 2 to 6, wherein the concave shape of the surface (22) of said device provides an area for applying pressure (21, 30) of the finger to the device for translation of that pressure on the area of the surface to a force sensitive resistor assembly (23) for achieving scrolling by the personal computer.

8. The actuator device of any preceding claim, wherein said device is for scrolling and the surface (22) of said device (10) is formed in the shape of a hyperbolic paraboloid for receiving the finger (28) of the user for actuating the device to accomplish scrolling on the personal computer.

9. The actuator device of any preceding claim wherein said surface (22) is textured to form protrusions extending from the surface to provide for gripping of the finger (28) to the surface (22) when the finger is pressed against the device (10) to achieve scrolling within the personal computer.

10. The actuator device (10) of claim 1, wherein said top surface is configured to have a convex shape when viewed in cross section along a plane through a centre line to the actuator device extending fore and aft to the actuator body, and configured to have concave shape when viewed in cross section along a plane through a center line to the actuator device extending laterally to the actuator body.

11. A mouse (12) comprising a joystick (20) having the actuator cap (10) of any preceding claim for use in performing a scrolling operation.

12. A personal computer including the mouse (12) of claim 11.

## Patentansprüche

1. Betätigungsvorrichtung (10) für einen Joystick (20) eines Personal Computers, wobei die Vorrichtung eine obere Fläche (22) für die Berührung durch einen Finger (28) eines Benutzers der Vorrichtung aufweist, welche sattelförmig geformt ist, damit der Finger beim Kontakt mit der Fläche (22) der Vorrichtung wippen kann, und welche in einer seitlichen Richtung beweglich ist, um den Joystick zu steuern.

2. Betätigungsvorrichtung nach Anspruch 1, wobei die Vorrichtung für eine Maus (12) für den Personalcomputer vorgesehen ist und eine obere Fläche (22) zum Aufnehmen des Fingers (28) des Benutzers der Maus aufweist, wobei die Fläche eine in Draufsicht im Wesentlichen ovale Form aufweist und eine Oberflächengestalt aufweist, die aus einer ersten Richtung, die eine erste Seitenansicht darstellt, eine konkave Oberflächenform und aus einer zweiten, zur ersten Richtung senkrechten Richtung, die eine zweite Seitenansicht darstellt, eine konvexe Oberflächenform aufweist.

3. Betätigungsvorrichtung nach Anspruch 2, die ferner eine der Fläche aufgeprägte Textur aufweist, damit der Finger (28) des Benutzers der Maus (12) in der konkaven und der konvexen Form der Fläche der Betätigungsvorrichtung (22) Halt findet.

4. Betätigungsvorrichtung nach Anspruch 3, bei der die der Fläche der Vorrichtung aufgeprägte Textur dem Benutzer die Unterscheidung zwischen Bildlaufrichtungen ermöglicht.

5. Betätigungsvorrichtung nach Anspruch 4, bei der die Textur aus der Fläche herausragende Erhebungen aufweist, um dem Finger auf der Oberfläche Halt zu geben, wenn der Finger gegen die Bildlaufvorrichtung gedrückt wird, um im Personalcomputer den Bildlauf zu erreichen.

6. Betätigungsvorrichtung nach Anspruch 3, 4 oder 5, bei der die der Fläche aufgeprägte Textur von gummiartiger Beschaffenheit ist, um dem Finger (28) des Benutzers ein Gefühl der Reibung zu vermitteln.

7. Betätigungsvorrichtung nach einem der Ansprüche 2 bis 6, bei der die konkave Form der Fläche (22) der Vorrichtung eine Fläche zum Ausüben von Druck (21, 30) auf die Vorrichtung durch den Finger bereitstellt, um zum Erreichen des Bildlaufs durch den Personalcomputer die auf die Fläche der Oberfläche ausgeübte Kraft auf eine druckempfindliche Widerstandsanordnung (23) zu übertragen.

8. Betätigungsvorrichtung nach einem der vorangehenden Ansprüche, wobei die Vorrichtung für den Bildlauf vorgesehen ist und die Fläche (22) der Vorrichtung (10) die Form eines hyperbolischen Paraboloids zum Aufnehmen des Fingers (28) des Benutzers zum Betätigen der Vorrichtung aufweist, um den Bildlauf in dem Personalcomputer zu erreichen.

9. Betätigungsvorrichtung nach einem der vorangehenden Ansprüche, bei der die Fläche (22) so texturiert ist, dass aus der Fläche herausragende Erhebungen gebildet werden, die dem Finger (28) auf der Oberfläche (22) Halt geben, wenn der Finger gegen die Vorrichtung (10) gedrückt wird, um den Bildlauf in dem Personalcomputer zu erreichen.

10. Betätigungsvorrichtung (10) nach Anspruch 1, bei der die obere Fläche so ausgebildet ist, dass sie eine in Querschnittsansicht entlang einer Ebene durch eine Mittellinie längs durch den Körper der Betätigungsvorrichtung konvexe Form aufweist und so ausgebildet ist, dass sie eine in Querschnittsansicht entlang einer Ebene durch eine seitlich durch den Körper der Betätigungsvorrichtung verlaufende Mittellinie konkave Form aufweist.

11. Maus (12), die einen Joystick (20) umfasst, welcher die Kappe der Betätigungsvorrichtung (10) eines der vorangehenden Ansprüche zur Benutzung für das Ausführen einer Bildlaufoperation aufweist.

12. Personal Computer, der die Maus (12) nach Anspruch 11 beinhaltet.

## Revendications

1. Un dispositif actionneur (10) pour un manchet ou manette de jeux (20) d'un ordinateur personnel, ledit dispositif ayant une surface supérieure (22) pour la mise en contact d'un doigt (26) d'un utilisateur du dispositif, conformée en selle pour servir de berceau au doigt lorsqu'il est en contact avec la surface du dispositif (22) et mobile en direction latérale pour commander ledit manchet ou manette.

2. Le dispositif actionneur selon la revendication 1, dans lequel le dispositif est prévu pour une souris (12) pour l'ordinateur personnel, ledit dispositif ayant une surface supérieure (22) pour recevoir le doigt (28) de l'utilisateur de la souris, la surface étant de forme sensiblement ovale, si l'on observe en plan, et la surface ayant une topographie qui, observée depuis une première position qui constitue une première vue de côté, est de forme concave à la surface, et qui, observée depuis une deuxième position, perpendiculaire à la première position, constitue une deuxième vue de côté, de forme convexe à la surface.

3. Le dispositif actionneur selon la revendication 2 comprenant en outre une texture imposée sur la surface afin de fournir une capacité de prise du doigt (28) de l'utilisateur de la souris (12) envers les formes concaves et convexes de la surface du dispositif actionneur (22).

4. Le dispositif actionneur selon la revendication 3, dans lequel la texture imposée sur la surface du dispositif permet à l'utilisateur de différencier entre des directions de défilement.

5. Le dispositif actionneur selon la revendication 4, dans lequel ladite texture comprend des saillies s'étendant depuis la surface afin de fournir une prise au doigt sur la surface lorsque le doigt est pressé contre le dispositif à défilement, pour obtenir une fonction de défilement dans l'ordinateur personnel.

6. Le dispositif actionneur selon la revendication 3, 4 ou 5, dans lequel la texture imposée sur la surface est analogue à du caoutchouc et d'une composition fournissant une sensation de friction envers le doigt (28) de l'utilisateur.

7. Le dispositif actionneur selon l'une quelconque des revendication 2 à 6, dans lequel la forme concave de la surface (22) dudit dispositif fournit une aire permettant d'appliquer une pression (21, 30) du doigt au dispositif pour effectuer une translation de cette pression sur l'aire de la surface à un ensemble à résistance sensible à la force (23), pour obtenir un défilement par l'ordinateur personnel.

8. Le dispositif actionneur selon l'une quelconque des revendications précédentes, dans lequel ledit dispositif est prévu pour un défilement et la surface (22) du dispositif (10) est conformée en paraboloïde hyperbolique pour recevoir le doigt (28) de l'utilisateur afin d'actionner le dispositif pour obtenir le défilement par l'ordinateur personnel.

9. Le dispositif actionneur selon l'une quelconque des revendications précédentes, dans lequel ladite surface (22) est texturée pour former des saillies qui s'étendent depuis la surface pour fournir une prise du doigt (28) sur la surface (22) lorsque le doigt est pressé contre le dispositif (10) pour obtenir un défilement dans l'ordinateur personnel.

10. Le dispositif actionneur (10) selon la revendication 1, dans lequel ladite surface supérieure est configurée pour avoir une forme convexe observée en coupe transversale dans un plan passant par un axe du dispositif actionneur s'étendant à l'avant et à l'arrière du corps d'actionneur et configurée pour avoir une forme concave lorsqu'on l'observe en vue en coupe dans un plan passant par un axe du dispositif actionneur s'étendant latéralement au corps d'actionneur.

11. Une souris (12) comprenant un manchet ou manette de jeux (20) ayant le capuchon d'actionneur (10) selon l'une quelconque des revendications précédentes pour utilisation dans l'exécution d'une opération de défilement.

12. Un ordinateur personnel comprenant la souris (12) de la revendication 11.
